Europäisches Patentamt

European Patent Office

Office européen des brevets

(19)

(11) Veröffentlichungsnummer : **0 491 881 B1**

(12) # EUROPÄISCHE PATENTSCHRIFT

(45) Veröffentlichungstag der Patentschrift :
**15.03.95 Patentblatt 95/11**

(51) Int. Cl.$^6$ : **H02P 5/40**

(21) Anmeldenummer : **91905042.7**

(22) Anmeldetag : **17.07.90**

(86) Internationale Anmeldenummer :
**PCT/DE90/00540**

(87) Internationale Veröffentlichungsnummer :
**WO 91/03867 21.03.91 Gazette 91/07**

(54) VERFAHREN ZUR FLUSSOLLWERTKORREKTUR EINER UMRICHTERGESPEISTEN, MEHRPHASIGEN MASCHINE UND SCHALTUNGSANORDNUNG ZUR DURCHFÜHRUNG DES VERFAHRENS.

(30) Priorität : **07.09.89 PCT/DE89/00582**

(43) Veröffentlichungstag der Anmeldung :
**01.07.92 Patentblatt 92/27**

(45) Bekanntmachung des Hinweises auf die
Patenterteilung :
**15.03.95 Patentblatt 95/11**

(84) Benannte Vertragsstaaten :
**DE FR GB IT SE**

(56) Entgegenhaltungen :
**EP-A- 0 043 973**

(73) Patentinhaber : **SIEMENS
AKTIENGESELLSCHAFT
Wittelsbacherplatz 2
D-80333 München (DE)**

(72) Erfinder : **HÜGEL, Harald
Steigerwaldallee 22
D-8520 Erlangen (DE)**
Erfinder : **SCHWESIG, Günter
Lange Zeile 84
D-8520 Erlangen (DE)**

## Beschreibung

Die Erfindung bezieht sich auf ein Verfahren zur Korrektur eines vorgesteuerten Flußsollwertes für eine feldorientierte Regelung, bestehend aus einem Stromsollwert-Modell und/oder einem Spannungssollwert-Modell, einer umrichtergespeisten, mehrphasigen Maschine mit einer Drehzahlerfassungseinrichtung und auf eine Schaltungsanordnung zur Durchführung des Verfahrens.

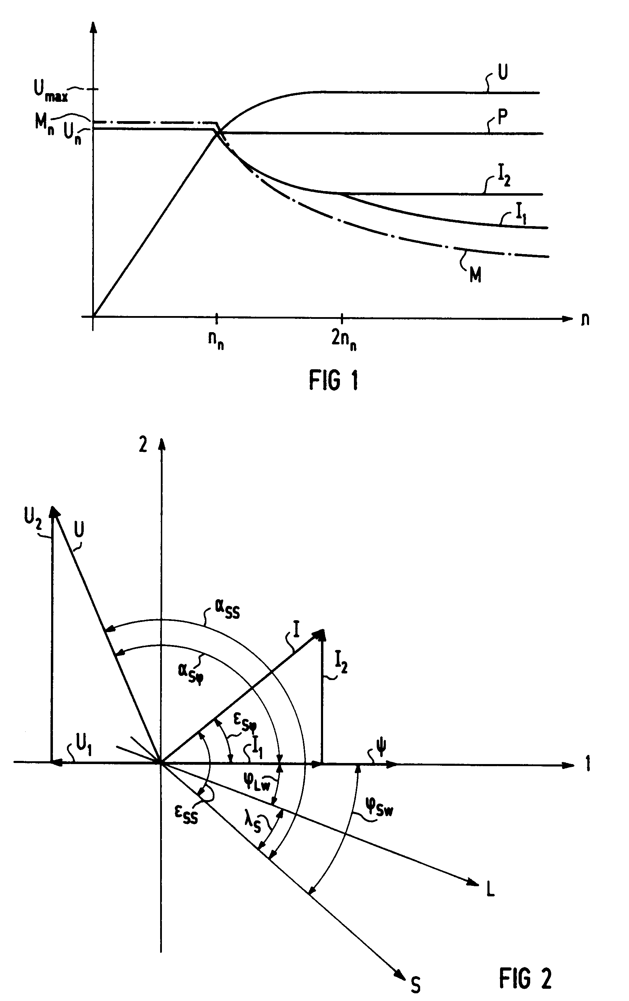

Aus der Zeitschrift "Automatisierungstechnische Praxis atp", 29. Jahrgang, Heft 2, 1987, Seiten 83 bis 88, ist eine umrichtergespeiste, mehrpolige Maschine, insbesondere eine Drehstromasynchronmaschine mit einer feldorientierten Regelung bekannt, wobei die Regelung ein Stromsollwert-Modell und ein Spannungssollwert-Modell enthält. Bei diesem Antrieb ist der gesamte Drehzahlstellbereich in drei Abschnitte gemäß Figur 1 eingeteilt. Ausgehend von Drehzahl Null bis zur Nenndrehzahl $n_n$ ist im Grunddrehzahlbereich konstantes Drehmoment M gefordert. Dementsprechend nimmt die Leistung P proportional zur Drehzahl n zu, es ergeben sich gleichbleibende Werte für die flußbildende Stromkomponente $I_1$, da die Maschine mit Nennfluß $\psi_n$ betrieben wird. Im Feldschwächbereich I (Drehzahlbereich $n_n$ bis $2n_n$) wird nun bei konstanter Leistung P die Spannung U vom Nennwert $U_n$ proportional $\sqrt{n}$ bis auf ihren Maximalwert angehoben, was einer Reduzierung der Magnetisierung umgekehrt proportional zu $\sqrt{n}$ entspricht. Die momentenbildende Stromkomponente $I_2$ nimmt im gleichen Maße ab. Ab der zweifachen Nenndrehzahl $n_n$ im Feldschwächbereich II bleibt die Spannung U am Ausgang des Umrichters konstant. Ihr Wert liegt um etwa 3 % unter der maximal möglichen Ausgangsspannung des Umrichters bei Vollblockbetrieb und einer vorbestimmten Zwischenkreisspannung, um geringe Spitzenströme für den Wechselrichter zu erhalten. Bei gleichbleibender Leistung P ändert die momentenbildende Stromkomponente $I_2$ ihren Wert nicht, während die flußbildende Stromkomponente $I_1$ jetzt umgekehrt proportional zur Drehzahl n zurückgeht. Durch diese Antriebsauslegung ist im Feldschwächbereich vom Moment M her genügend Abstand zum Kippmoment zu halten. Erreicht wird dies durch einen streuungsarmen Maschinenentwurf und durch die Spannungsanhebung.

Wird nun die mehrphasige Maschine bei hohen Drehzahlen stärker belastet, so erzeugt die feldorientierte Regelung einen Spannungssollwert als Stellgröße des Umrichters, der größer ist als der maximale Umrichterausgang-Spannungswert, der in Abhängigkeit einer Zwischenkreisspannung und bei Vollblockbetrieb erzeugt werden kann. D.h. die Regelung erzeugt eine Stellgröße für den Umrichter, der der Umrichter nicht folgen kann, da ein entsprechender Ausgangsspannungswert größer sein müßte als der maximale Umrichterausgang-Spannungswert. Dadurch stimmt der Flußistwert mit dem Flußsollwert nicht mehr überein, wodurch der feldorientierte Bereich verlassen wird. Es entsteht Fehlorientierung.

Wird beim Regelungskonzept eine unterlagerte Stromregelung benutzt, so ergibt sich eine zusätzliche Problematik. Durch die falsche Flußwertvorgabe entsteht eine falsche Magnetisierungsstromvorgabe, da die flußbildende Stromkomponente $I_1$ gleich dem Quotient aus Fluß $\psi$ und Hauptfeldinduktivität $L_h$ der Maschine ist. Zur Einprägung dieses Stromsollwertes wird eine Umrichterspannung benötigt, die nicht mittels des Zwischenkreises realisiert werden kann. Damit ist der Stromkreis außer Funktion. Es entsteht auch hier Fehlorientierung.

Der Erfindung liegt nun die Aufgabe zugrunde, ein Verfahren bzw. eine Schaltungsanordnung zur Korrektur eines vorgesteuerten Flußsollwertes einer feldorientierten Regelung einer mehrphasigen Maschine anzugeben, wobei keine Fehlorientierung der feldorientierten Regelung mehr auftreten kann.

Diese Aufgabe wird erfindungsgemäß dadurch gelöst, daß mittels eines Vergleichs eines als Stellgröße für den Umrichter dienender Spannungssollwertes mit einem vorbestimmten, maximalen Umrichterausgang-Spannungswert eine Spannungsregeldifferenz erzeugt wird, aus der mittels eines Flußkorrekturreglers eine Flußregelgröße erzeugt wird, die den vorgesteuerten Flußsollwert solange reduziert bis der Spannungssollwert für den Umrichter wieder kleiner oder gleich dem vorbestimmten maximalen Umrichterausgang-Spannungswert ist.

Durch dieses Verfahren wird der vorgesteuerte Flußsollwert immer so korrigiert, daß der als Stellgröße dienende Spannungssollwert für den Umrichter immer kleiner oder gleich ist dem maximalen Stromrichterausgang-Spannungswert, wodurch der Flußistwert und der Flußsollwert übereinstimmen und die Regelung nicht den feldorientierten Bereich verlassen kann. Außerdem wird erreicht, daß bei einem Regelungskonzept mit unterlagerter Stromregelung die flußbildende Stromkomponente $I_1$ mittels eines Stromsollwert-Modells immer richtig gebildet wird.

Bei einer erfindungsgemäßen Schaltungsanordnung zur Durchführung des Verfahrens mit einer Regelung, bestehend aus einem Stromsollwert-Modell und/oder einem Spannungssollwert-Modell, einer umrichtergespeisten, mehrphasigen Maschine mit einer Drehzahlerfassungseinrichtung, wobei dem Stromsollwert-Modell bzw. dem Spannungssollwert-Modell ein Drehzahlregler und ein Kennliniengeber vorgeschaltet sind, ist der erzeugte Spannungssollwert einem zweiten Differenzbildner zugeführt, an dessen ersten Eingang ein maximaler Umrichterausgang-Spannungswert ansteht, dessen Ausgang mit einem nachgeschalteten Flußkorrekturregler verbunden ist, der einseitig begrenzt ist, und ist der Flußkorrekturregler ausgangsseitig mittels eines ersten Differenzbildners mit einem Ausgang des Kennliniengebers verbunden, wobei der Ausgang des ersten Differenzbildners mit einem Eingang des Stromsollwert-Modells bzw. des Spannungssollwert-Modells verknüpft ist.

Mit dieser Schaltungsanordnung wird in einfacher Weise der Flußsollwert für eine feldorientierte Regelung, bestehend aus einem Stromsollwert-Modell und/oder einem Spannungssollwert-Modell, in Abhängigkeit des Verhältnisses Spannungssollwert des Umrichters zum Umrichterausgang-Spannungswert jederzeit korrigiert, wodurch der die mehrphasige Maschine speisende Umrichter maximal ausgenutzt werden kann.

Zur weiteren Erläuterung der Erfindung wird auf die Zeichnung Bezug genommen, in der ein Ausführungsbeispiel der Schaltungsanordnung zur Durchführung des erfindungsgemäßen Verfahrens zur Korrektur eines Flußsollwertes schematisch veranschaulicht ist.

Figur 1    zeigt die Verläufe spezifischer Maschinenwerte, die in einem Diagramm über der Drehzahl n dargestellt sind, in

Figur 2    ist ein Zeigerdiagramm einer Asynchronmaschine für feldorientierten Betrieb veranschaulicht,

Figur 3    zeigt ein Blockschaltbild einer feldorientierten Regelung mit unterlagerter Spannungssteuerung und mit der erfindungsgemäßen Flußsollwertkorrekturschaltung für eine umrichtergespeiste Asynchronmaschine und

Figur 4    veranschaulicht ein Blockschaltbild einer feldorientierten Regelung mit unterlagerter Stromregelung und mit der erfindungsgemäßen Flußsollwertkorrektur für eine umrichtergespeiste Asynchronmaschine.

Die Figur 2 zeigt ein Zeigerdiamm einer Asynchronmaschine für feldorientierten Betrieb. Zur Vereinfachung wird von einer zweipoligen Maschine ausgegangen. Im stationären Betrieb laufen die Raumzeiger der Ständerspannung U, des Ständerstroms I und des Läuferflusses $\psi$ gegenüber der Ständerachse S mit der Ständerfrequenz $f_I = \dot{\phi}_S$ um. Der Läufer der Maschine dreht sich gegenüber der Ständerachse L mit der Drehzahl $n = \dot{\lambda}_S$. Die Differenzfrequenz, mit der sich die Läuferachse L gegenüber der Läuferflußachse 1 bewegt, ist die Schlupffrequenz $f_S = \dot{\phi}_L$. Betrachtet man den Ständerstrom I von der Läuferflußachse 1 aus, so ergeben sich zwei konstante Komponenten. Die Stromkomponente $I_1$ verläuft parallel zur Läuferflußachse 1 und die Stromkomponente $I_2$ senkrecht zur Läuferflußachse 1.

Feldorientierter Betrieb bedeutet nun, den Ständerstrom I bzw. die Ständerspannung U der Maschine so vorzugeben, daß die drehmomentbildende Stromkomponente $I_2$ und die flußbildende Stromkomponente $I_1$ getrennt voneinander verstellt werden können. Wird die Stromkomponente $I_1$ konstant gehalten, ergibt sich ein konstanter Läuferfluß $\psi$. Das mechanische Drehmoment M ist das Produkt aus $\psi$, $I_2$. Der für feldorientierten Betrieb erforderliche Strom- bzw. Spannungsvektor wird aus Sollwerten berechnet. Dazu werden die Drehzahl, der Rotorlagewinkel $\lambda_S$ und die Maschinenparameter, beispielsweise Hauptfeldreaktanz $X_h$, Ständerstreureaktanz $X_S$, Läuferstreureaktanz $X_L$ und Ständerwiderstand $R_S$, benötigt. Die Regelung basiert auf zwei verschiedenen Teilstrukturen, dem Stromsollwert-Modell und dem Spannungssollwert-Modell. Um die Vorteile beider Systeme zu nutzen, können diese, wie bereits aus Automatisierungstechnische Praxis atp", 29. Jahrgang, Heft 2, 1987, Seiten 83 bis 88, bekannt ist, miteinander verknüpft werden.

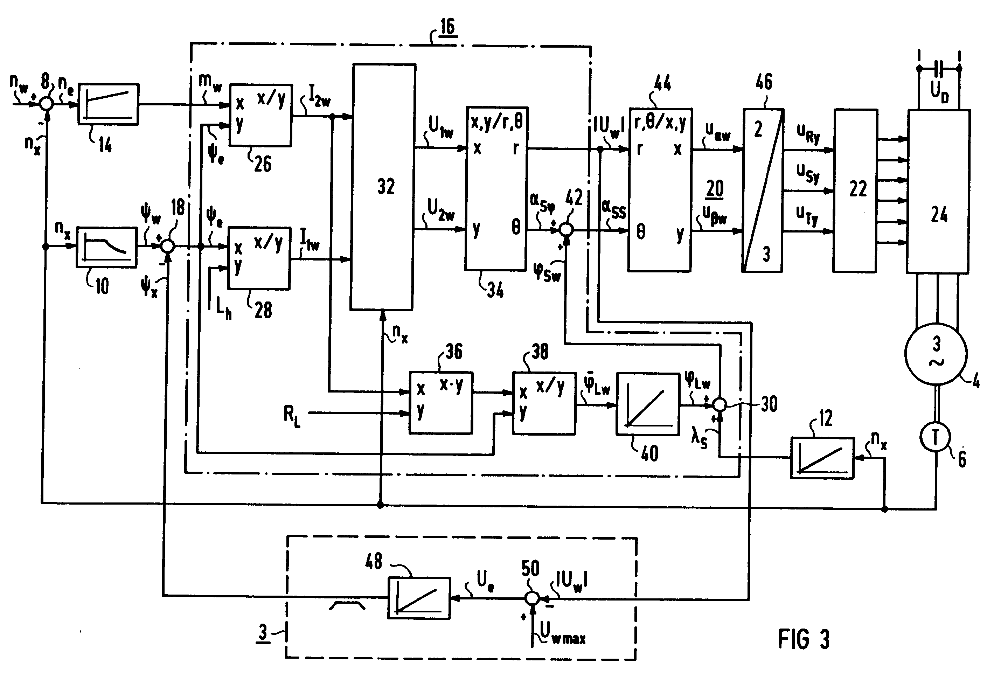

Die Figur 3 zeigt ein Blockschaltbild einer feldorientierten Regelung mit unterlagerter Spannungssteuerung und mit der erfindungsgemäßen Flußsollwertkorrekturschaltung 3 für eine Drehstromasynchronmaschine 4 mit einem Tachogenerator 6 als Drehzahlerfassungseinrichtung. Der Tachogenerator 6 liefert einen Drehzahlistwert $n_x$, der einem Vergleicher 8, einem Kennliniengeber 10 für den Flußsollwert $\psi_w$ und einem Integrator 12 zugeführt wird, wobei der Integrator 12 aus der Drehzahl $n_x$ einen Rotorlagewinkel $\lambda_S$ erzeugt. Am ersten Eingang des Vergleichers 8 steht ein Drehzahlsollwert $n_w$ an, der mittels des Vergleichers 8 mit dem Drehzahlistwert $n_x$ verglichen wird. Am Ausgang dieses Vergleichers 8 steht ein Drehzahldifferenzwert $n_e$ an, der einem Drehzahlregler 14 zugeführt wird, an dessen Ausgang ein Momentensollwert $m_w$ ansteht. Dieser Momentensollwert $m_w$ wird einem ersten Eingang eines Spannungssollwert-Modells 16 zugeführt. Am zweiten Eingang dieses Spannungssollwert-Modells 16 steht ein korrigierter Flußsollwert $\psi_e$ an, der am Ausgang eines ersten Differenzbildners 18 ansteht. Dieser Differenzbildner 18 ist eingangsseitig einerseits mit dem Ausgang des Flußreglers 10 und andererseits mit einem Ausgang einer Flußsollwertkorrekturschaltung 3 verknüpft. Einem dritten Eingang des Spannungssollwert-Modells 16 ist ein Rotorlagewinkelsignal $\lambda_S$ zugeführt, das mittels des Integrators 12 aus dem Drehzahlistwert $n_x$ erzeugt ist. Ausgangsseitig ist das Spannungssollwert-Modell 16 über eine Koordinatenwandleranordnung 20 mit nachgeschaltetem Steuersatz 22 mit einem die Drehstromasynchronmaschine 4 speisenden Umrichter 24 verbunden.

Das Spannungssollwert-Modell 16 enthält eingangsseitig zwei Quotientenbildner 26 und 28 und einen Addierer 30. Außerdem enthält dieses Spannungssollwert-Modell 16 eine Recheneinheit 32, einen K/P-Wandler 34 (kartesisch/polar), einen Multiplizierer 36, einen weiteren Quotientenbildner 38 und einen Integrator 40. Dem Eingang x des ersten Quotientenbildners 26 ist der Momentensollwert $m_w$ des Drehzahlreglers 14 und dem Eingang y ist der korrigierte Flußsollwert $\psi_e$, der außerdem am Eingang x des zweiten Quotientenbildners 28 ansteht, zugeführt. Dem Eingang y des zweiten Quotientenbildners 28 ist ein Hauptfeldinduktivitätswert $L_h$ zugeführt. Infolge der Quotientenbildung der Eingangssignale erscheinen am Ausgang des ersten Quotientenbildners 26 die momentenbildende Stromsollwertkomponente $I_{2w}$ und am Ausgang des zweiten Quotientenbildners 28 die flußbildende Stromsollwertkomponente $I_{1w}$. Diese ermittelten Stromsollwertkomponenten $I_{1w}$ und $I_{2w}$ sind einer Recheneinheit 32 zugeführt, der außerdem der Drehzahlistwert $n_x$ zugeführt ist. In einem Speicher dieser Recheneinheit 32 sind Maschinenparameterwerte, beispielsweise der Streuinduktivitäten $X_{S\sigma}$ und $X_{L\sigma}$, der Hauptfeldreaktanz $X_h$ und des Ständerwiderstandes $R_S$, abgespeichert. Mit Hilfe dieser abgespeicherten Werte und der anstehenden Signale werden die Spannungssollwertkomponenten $U_{1w}$ und $U_{2w}$ gemäß folgender Gleichungen

$$U_{1w} = I_1 R_S - I_2 X_\sigma$$

$$U_{2w} = I_1 X_\sigma + I_2 R_S + \psi \cdot \frac{1}{1 + \sigma_L} \cdot f_l$$

$$X_\sigma = X_{S\sigma} + X_{L\sigma} \frac{1}{1 + \sigma_L}$$

$$\sigma_L = X_{L\sigma}/X_h$$

$$f_l = n_x + \dot{\varphi}_{Lw}$$

mit

$X_\sigma$ :      Streureaktanz
$X_{S\sigma}$ :    Ständerstreureaktanz
$X_{L\sigma}$ :    Läuferstreureaktanz
$X_h$ :      Hauptfeldreaktanz
$\sigma_L$ :      Streukoeffizient
$f_l$ :       Ständerfrequenz
$n_x$ :      Drehzahlistwert
$\dot{\varphi}_{Lw}$ :    Schlupffrequenzsollwert

berechnet. Diese Spannungssollwertkomponenten $U_{1w}$ und $U_{2w}$, die rechtwinklig zueinander sind, werden mittels des K/P-Wandlers 34 in einen Betrag des Spannungssollwerts $|U_w|$ und einem Winkel $\alpha_{S\varphi}$, der den Winkel zwischen der Ständerspannung U und der Läuferflußachse 1 gemäß Figur 2 angibt, umgewandelt.

Die erzeugte Stromsollwertkomponente $I_{2w}$ wird außerdem einem Eingang x des Multiplizierers 36 zugeführt, an dessen Eingang y der Läuferwiderstandswert $R_L$ ansteht. Der Ausgang des Multiplizierers 36 ist mit dem Eingang x des Quotientenbildners 38 verbunden, wobei der Eingang y mit dem Ausgang des ersten Differenzbildners 18 bzw. jeweils mit dem Eingang x der beiden Quotientenbildner 26 und 28 verbunden ist. Ausgangsseitig steht der Schlupffrequenzsollwert $\dot{\varphi}_{Lw}$ an, der mittels des Integrators 40, in den Lastwinkelsollwert $\varphi_{Lw}$ gewandelt wird. Zu diesem Lastwinkelsollwert $\varphi_{Lw}$ wird der Rotorlagewinkelwert $\lambda_S$ addiert, so daß sich der Winkelwert $\varphi_{Sw}$ ergibt, der den Winkel zwischen der Läuferflußachse 1 und der Ständerachse S nach Figur 2 angibt. Dieser Winkel $\varphi_{Sw}$ wird zum Winkel $\alpha_{S\varphi}$ mittels eines weiteren Addierers 42 addiert, wobei sich am Ausgang dieses Addierers 42 ein Winkelwert $\alpha_{SS}$ einstellt, der den Winkel zwischen der Ständerspannung U und der Ständerachse S nach Figur 2 angibt.

Mittels der Koordinatenwandleranordnung 20, bestehend aus einem P/K-Wandler 44 und einem Koordinatenwandler 46, wird der Betrag des Spannungssollwertes $|U_w|$ bzw. Zeigerbetrag $|U_w|$ und der Winkel $\alpha_{SS}$ in drei Stellgrößen $u_{Ry}$, $u_{Sy}$ und $u_{Ty}$ gewandelt. Mittels des Steuersatzes 22 und des Umrichters 24 werden aus den Stellgrößen $u_{Ry}$, $u_{Sy}$ und $u_{Ty}$ Phasenspannungssollwertes gebildet.

Die Flußsollwertkorrekturschaltung 3, die ausgangsseitig mit dem ersten Differenzbildner 18 und eingangsseitig mit dem Betragsausgang des Spannungssollwert-Modells 16 verbunden ist, besteht aus einem einseitig begrenzten Flußkorrekturregler 48 und einen zweiten Differenzbildner 50. Dieser Differenzbildner 50 vergleicht den Betrag des gebildeten Spannungssollwertes $|U_w|$ mit einem vorbestimmten maximalen Umrichterausgang-Spannungswert $U_{wmax}$, wobei eine entstandene Spannungsregeldifferenze $U_e$ dem Flußkorrekturregler 48 zugeführt ist. Dieser Flußkorrekturregler 48 erzeugt einen Flußkorrekturwert $\psi_x$, der dem zweiten Eingang des ersten Differenzbildners 18 zugeführt ist. Sobald der Betrag des als Stellgröße für den Umrichter 24 dienenden Spannungssollwertes $|U_w|$ größer wird als der vorgegebene maximale Umrichterausgang-Spannungswert $U_{wmax}$, wird eine Spannungsregeldifferenz $U_e$ gebildet, so daß der Flußkorrekturregler 48 zum Einsatz kommt. D.h., der erzeugte Flußkorrekturwert $\psi_x$ reduziert den vorgesteuerten Flußsollwert $\psi_w$ solange, bis der Betrag des Spannungssollwertes $|U_w|$ wieder kleiner oder gleich dem maximalen Umrichterausgang-Spannungswerts $U_{wmax}$ ist. Durch die einseitige Begrenzung des Flußkorrekturreglers 48 kann der vorgesteuerte Flußsollwert $\psi_w$ nur reduziert werden.

Durch dieses Verfahren bzw. Schaltungsanordnung stimmen immer die Flußsollwerte mit den Flußistwerten der Drehstromasynchronmaschine 4 überein, wodurch nie der feldorientierte Bereich verlassen wird. Dies gilt insbesondere bei hohen Drehzahlen einer belasteten Drehstromasynchronmaschine 4.

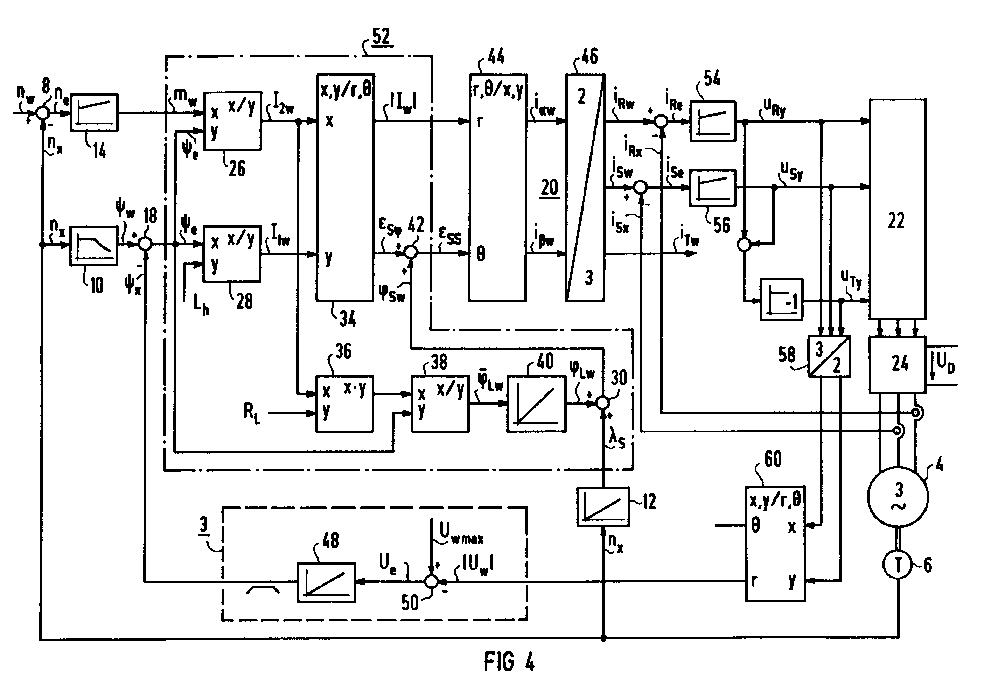

In Figur 4 ist ein Blockschaltbild einer feldorientierten Regelung mit einem Stromsollwert-Modell 52 und der erfindungsgemäßen Flußsollwertkorrekturschaltung 3 veranschaulicht. Gegenüber der feldorientierten Regelung gemäß Figur 3 ist das Stromsollwert--Modell 52 einfacher aufgebaut, da keine Recheneinheit 32 vorhanden ist. Da sich das Blockschaltbild gemäß Figur 3 gegenüber dem Blockschaltbild nach Figur 4 nur geringfügig unterscheidet, bezeichnen gleiche Bezugszeichen dieselben Blöcke. Zwei der drei mittels des Stromsollwert-Modells 52 und der Koordinatenwandleranordnung erzeugten Stellgrößen $i_{Rw}$, $i_{Sw}$ und $i_{Tw}$ werden mittels zweier Phasenstromregler 54 und 56 im Steuersatz 22 eingeprägt. Die drei Eingangsgrößen $u_{Ry}$, $u_{Sy}$ und $u_{Ty}$ des Steuersatzes 22 werden mittels eines Koordinatenwandlers 58 mit einem nachgeschalteten K/P-Wandler 60 in einem Betrag des Spannungssollwertes $|U_w|$ gewandelt und der Flußsollwertkorrekturschaltung 3 zugeführt. Durch die Korrektur des vorgesteuerten Flußsollwertes $\psi_w$ wird außerdem keine falsche flußbildende Stromsollwertkomponente $I_1$ mehr vorgegeben.

## Patentansprüche

1. Verfahren zur Korrektur eines vorgesteuerten Flußsollwertes ($\psi_w$) für eine feldorientierte Regelung, bestehend aus einem Stromsollwert-Modell (52) und/oder einem Spannungssollwert-Modell (16), einer umrichtergespeisten, mehrphasigen Maschine (4) mit einer Drehzahlerfassungseinrichtung (6), **dadurch gekennzeichnet**, daß mittels eines Vergleichs eines als Stellgröße für den Umrichter (24) dienenden Spannungssollwertes ($|U_w|$) mit einem vorbestimmten, maximalen Umrichterausgang-Spannungswert ($U_{wmax}$) eine Spannungsregeldifferenz ($U_e$) erzeugt wird, aus der mittels eines Flußkorrekturreglers (48) eine Flußregelgröße ($\psi_x$) erzeugt wird, die den vorgesteuerten Flußsollwert ($\psi_w$) solange reduziert bis der Spannungssollwert ($|U_w|$) für den Umrichter (24) wieder kleiner oder gleich dem vorbestimmten, maximalen Umrichterausgang-Spannungswert ($U_{wmax}$) ist.

2. Schaltungsanordnung zur Durchführung des Verfahrens nach Anspruch 1 mit einer Regelung, bestehend aus einem Stromsollwert-Modell (52) und/oder einem Spannungssollwert-Modell (16), einer umrichtergespeisten, mehrphasigen Maschine (4) mit einer Drehzahlerfassungseinrichtung (6), wobei dem Stromsollwert-Modell (52) bzw. dem Spannungssollwert-Modell (16) ein Drehzahlregler (14) und ein Kennliniengeber (10) vorgeschaltet sind, **dadurch gekennzeichnet**, daß der erzeugte Spannungssollwert ($|U_w|$) einem zweiten Differenzbildner (50) zugeführt ist, an dessen ersten Eingang ein maximaler Umrichterausgang-Spannungswert ($U_{wmax}$) ansteht und dessen Ausgang mit einem nachgeschalteten Flußkorrekturregler (48) verbunden ist, der einseitig begrenzt ist, und daß der Flußkorrekturregler (48) ausgangsseitig mittels eines ersten Differenzbildners (18) mit einem Ausgang des Kennliniengebers (10) verbunden ist, wobei der Ausgang des ersten Differenzbildners (18) mit einem Eingang des Stromsollwert-Modells (52) bzw. des Spannungssollwert-Modells (16) verknüpft ist.

3. Schaltungsanordnung nach Anspruch 2, **dadurch gekennzeichnet**, daß der Spannungssollwert ($|U_w|$) mittels eines Koordinatenwandlers (58) mit nachgeschalteten K/P-Wandler (60) aus mehreren Stellgrößen ($u_{Ry}$, $u_{Sy}$, $u_{Ty}$) des Steuersatzes (22) erzeugt ist.

## Claims

1. Process for correcting a precontrolled flux setpoint ($\psi_w$) for a field-orientated control, comprising a current setpoint model (52) and/or a voltage setpoint model (16), a converter-fed, polyphase machine (4) having a speed measuring device (6), **characterised in that** a voltage deviation ($U_e$) is generated by means of a comparison between a voltage setpoint ($|U_w|$), used as the manipulated variable for the converter (24), and a predetermined, maximum converter output voltage value ($U_{wmax}$), from which voltage deviation ($U_e$) a flux manipulated variable ($\psi_x$) is generated via a flux correction controller (48), which flux manipulated variable ($\psi_x$) reduces the precontrolled flux setpoint ($\psi_w$) until the voltage setpoint ($|U_w|$) for the converter (24) is again less than or equal to the predetermined, maximum converter output voltage value ($U_{wmax}$).

2. Circuit arrangement for implementing the process according to Claim 1, with a control, comprising a current setpoint model (52) and/or a voltage setpoint model (16), a converter-fed, polyphase machine (4) having a speed measuring device (6), a speed controller (14) and a curve generator (10) being connected upstream of the current setpoint model (52) or the voltage setpoint model (16), respectively, **characterised in that** the generated voltage setpoint ($|U_w|$) is fed to a second difference generator (50) to whose first input is applied a maximum converter output voltage value ($U_{wmax}$), and whose output is connected to a downstream flux correction controller (48) whose input is limited, and that the output of the flux correction controller (48) is connected via a first difference generator (18) to one output of the curve generator (10), the output of the first difference generator (18) being linked to one input of the current setpoint model (52) or the voltage setpoint model (16), respectively.

3. Circuit arrangement according to Claim 2, **characterised in that** the voltage setpoint ($|U_w|$) is generated from several manipulated variables ($u_{Ry}$, $u_{Sy}$, $u_{Ty}$) of the gate control set (22) by means of a coordinate converter (58) having a downstream K/P converter (60).

## Revendications

1. Procédé pour corriger la valeur de consigne du flux ($\psi_w$) contrôlé par commande pilote, pour une régulation rapportée au champ, constitué par un modèle (52) délivrant la valeur de consigne du courant et/ou un modèle (16) délivrant la valeur de consigne de tension, une machine polyphasée (4) alimentée par un mutateur et comportant un dispositif (6) de détection de la vitesse de rotation, caractérisé par le fait qu'à l'aide d'une comparaison entre une valeur de consigne de tension ($|U_w|$) utilisée comme grandeur de réglage pour le mutateur (24) et une valeur maximale prédéterminée de tension ($U_{wmax}$) de sortie du mutateur est formée une différence de régulation de tension ($U_e$), à partir de laquelle est produite, au moyen d'un régulateur (48) de correction du flux, une grandeur ($\psi_x$) de régulation du flux, qui réduit la valeur de consigne ($\psi_w$) du flux, contrôlée selon une commande pilote, jusqu'à ce que la valeur de consigne de tension ($|U_w|$) pour le mutateur (24) devienne inférieure ou égale à la valeur maximale prédéterminée ($U_{wmax}$) de la tension de sortie du mutateur.

2. Montage pour la mise en oeuvre du procédé suivant la revendication 1 avec un dispositif de régulation, constitué par un modèle (52) délivrant la valeur de consigne du courant et/ou un modèle (16) délivrant la valeur de consigne de la tension, d'une machine polyphasée (4) alimentée par un mutateur et un dispositif (6) de détection de la vitesse de rotation, un régulateur (14) de la vitesse de rotation et un générateur (10) de courbes caractéristiques étant branchés en amont du modèle (52) délivrant la valeur de tension du courant et du modèle (16) délivrant la valeur de consigne de la tension, caractérisé par le fait que la valeur de consigne produite ($|U_w|$) de la tension est envoyée à un second dispositif de formation de différence (50), à la première entrée duquel est appliquée une valeur maximale de tension ($U_{wmax}$) de sortie du mutateur et dont la sortie est reliée à un régulateur (48) de correction du flux, qui est branché en aval et qui est limité unilatéralement, et que le régulateur (48) de correction du flux est relié, côté sortie, au moyen d'un premier dispositif de formation de différence (18), à une sortie du générateur (10) de courbes caractéristiques, la sortie du premier dispositif de formation de différence (18) étant reliée à une entrée du modèle (52) délivrant la valeur de consigne du courant ou du modèle (16) délivrant la valeur de consigne de la tension.

3. Montage suivant la revendication 2, caractérisé par le fait que la valeur de consigne de la tension ($|U_w|$) est produite au moyen d'un convertisseur de coordonnées (56) en aval duquel est branché un convertisseur de coordonnées cartésiennes/coordonnées polaires (60), à partir de plusieurs grandeurs de réglage ($u_{Ry}$, $u_{Sy}$, $u_{Ty}$) de l'ensemble de commande (22).

6

FIG 1

FIG 2

FIG 3

FIG 4